# EUROPÄISCHE PATENTANMELDUNG

(11) **EP 3 527 992 A1**
(43) Veröffentlichungstag der Anmeldung: **21.08.2019**
(21) Anmeldenummer: 18157160.5
(22) Anmeldetag: 16.02.2018
(51) Int. Cl.: G01P 5/20, G01N 17/00

(54) **SENSORANORDNUNG UND VERFAHREN ZUR MESSUNG EINER LUFTSTRÖMUNG**

(71) Anmelder: Weiss Umwelttechnik GmbH, 35447 Reiskirchen (DE)
(72) Erfinder: SCHLOSSER, Volker, 35305 Grünberg (DE)
(74) Vertreter: advotec.

(57) **Zusammenfassung**

Die Erfindung betrifft eine Sensoranordnung (10), eine Prüfkammer sowie ein Verfahren zur Messung einer Luftströmung in einer Prüfkammer, insbesondere Klimakammer, wobei die Sensoranordnung eine Kamera (11, 12) zur Aufnahme von Bilddatensätzen, eine in der Luftströmung anordbare Blasenvorrichtung (13) zur Erzeugung von Seifenblasen (14) und eine Auswertevorrichtung zur Verarbeitung der Bilddatensätze der Kamera umfasst, wobei eine Seifenblase in einem Objektraum (20) der Kamera in einer Luftströmung von der Kamera aufnehmbar ist, wobei mittels der Auswertevorrichtung aus einer zeitlichen Abfolge von Bilddatensätzen eine Bewegung der Seifenblase ableitbar und die Luftströmung messbar ist.

## Beschreibung

Die Erfindung betrifft eine Sensoranordnung für eine Prüfkammer sowie ein Verfahren zur Messung einer Luftströmung, insbesondere zur Messung innerhalb einer Prüfkammer.

Bei der Temperatur- und Klimaprüfung von Prüfgut werden regelmäßig Prüfkammern mit verschließbaren Prüfräumen eingesetzt, in denen zumindest eine Temperatur und auch andere Umgebungsparameter einstellbar sind, um bestimmte klimatische und andere Umgebungsbedingungen simulieren zu können. Das Prüfgut wird dabei innerhalb eines Prüfablaufs beziehungsweise eines Prüfzeitabschnitts der simulierten Umgebungsbedingung ausgesetzt. Beispielsweise kann ein Prüfablauf auch mehrere Zeitabschnitte mit sukzessiven Temperaturwechseln umfassen. Derartige Prüfabläufe können sich regelmäßig über einen Zeitraum von Stunden oder Tagen erstrecken, sodass eventuelle Veränderungen des Prüfguts, die durch die Prüfbedingungen bedingt sein können, eine permanente Überwachung des Prüfguts und der klimatischen Umgebungsbedingungen erfordert. Eine Prüfkammer ist zur Überwachung dieser Umgebungsbedingungen mit einer Reihe von Sensoren ausgestattet.

Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal beziehungsweise den Prüfraum durchströmenden Luft angeordnet sind. Dabei saugt ein Lüfter beziehungsweise ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln. In dem Prüfraum kann eine Temperatur in einem Temperaturbereich von - 80° C bis + 180° C ausgebildet werden, wobei auch eine relative Luftfeuchte innerhalb des Prüfraums eingestellt werden kann. Die tatsächlichen klimatischen Bedingungen in dem Prüfraum werden dann mit entsprechenden Sensoren für beispielsweise Temperatur, Luftgeschwindigkeit und relative Luftfeuchte erfasst, um die gewünschten klimatischen Bedingungen einstellen zu können.

Insbesondere beeinflusst auch eine Luftströmung innerhalb des Prüfraums die Einstellung einer Prüfbedingung an einen Prüfling. Beispielsweise kann sich bedingt durch eine Luftströmung Feuchtigkeit an einer Fläche des Prüflings niederschlagen und an einer anderen Fläche nicht. Auch kann durch eine Luftströmung bedingt eine ungleichmäßige Erwärmung oder Abkühlung des Prüflings erfolgen. Eine einfache Messung einer Luftströmung ist jedoch in dem Prüfraum kaum möglich, da dann eine Vielzahl von Sensoren zur Bestimmung einer Luftgeschwindigkeit in diesem positioniert werden müssten. Zwar ist es auch bekannt, Luftströme durch ein optisches Verfahren (Particle Image Velocimetry) zu bestimmen, bei diesem Verfahren werden jedoch einer dafür erforderlichen, ausreichend starken Luftströmung kleinste Partikel zugesetzt, beispielsweise durch Zerstäuben von Ölen, was in einem Prüfraum kaum möglich ist. So ist Öl in einer Prüfraumatmosphäre unerwünscht und eine Luftgeschwindigkeit gegebenenfalls zu niedrig, um einen Verlauf einer Luftströmung am Prüfling überhaupt nachvollziehen zu können. So kann eine Messung einer Luftströmung am Prüfling nicht ohne zusätzliche Sensoren erfolgen.

Der vorliegenden Erfindung liegt daher die Aufgabe zugrunde, eine Sensoranordnung zur Messung einer Luftströmung, eine Prüfkammer mit einer Sensoranordnung und ein Verfahren zur Messung einer Luftströmung in einer Prüfkammer vorzuschlagen, die beziehungsweise das eine einfache und kostengünstige Messung einer Luftströmung in einem Prüfraum ermöglicht.

Diese Aufgabe wird durch eine Sensoranordnung mit den Merkmalen des Anspruchs 1, eine Prüfkammer mit den Merkmalen des Anspruchs 9 und ein Verfahren mit den Merkmalen des Anspruchs 11 gelöst.

Die erfindungsgemäße Sensoranordnung zur Messung einer Luftströmung, insbesondere zur Messung innerhalb einer Prüfkammer, umfasst eine Kamera zur Aufnahme von Bilddatensätzen, eine in der Luftströmung anordbare Blasenvorrichtung zur Erzeugung von Seifenblasen und eine Auswertevorrichtung zur Verarbeitung der Bilddatensätze der Kamera, wobei eine Seifenblase in einem Objektraum der Kamera in einer Luftströmung von der Kamera aufnehmbar ist, wobei mittels der Auswertevorrichtung aus einer zeitlichen Abfolge von Bilddatensätzen eine Bewegung der Seifenblase ableitbar und die Luftströmung messbar ist.

Die Kameradient hier als ein optischer Sensor, wobei prinzipiell jede Art von Kamera verwendet werden kann, die geeignet ist, eine Bildfolge einer sich bewegenden Seifenblase aufzunehmen und davon Bilddatensätze zu generieren. Beispielsweise kann die Kamera einen CCD-Chip mit einem Objektiv umfassen. Die Blasenvorrichtung dient zur Erzeugung von Seifenblasen und kann in unterschiedlicher Weise ausgebildet sein. Eine Seifenblase ist eine hohle Kugel, die aus einem dünnen Film aus Seifenwasser ausgebildet ist. Die Blasenvorrichtung umfasst zumindest ein Element, welches geeignet ist, einen dünnen Wasserfilm mit Seifenmolekülen zu erzeugen, sodass durch Beaufschlagung mit einer Luftströmung beziehungsweise Aufblasen eine Kugelform entstehen kann. Dieses Element kann beispielsweise ringförmig ausgebildet sein und kontinuierlich mit dem Seifenwasser benetzt werden. Alternativ ist es auch denkbar, Seifenblasen mittels einer Düse zu erzeugen, die an einer Öffnung mit Seifenwasser benetzt wird. Die Auswertevorrichtung dient zur Verarbeitung der Bilddatensätze der Kamera und ist durch Mittel zur Datenverarbeitung ausgebildet. Die Auswertevorrichtung kann ein Computer mit einem darauf ausgeführten Computerprogrammprodukt sein. Die Auswertevorrichtung erfasst nun die in einer zeitlichen Abfolge aufgenommenen Bilddatensätze der Kamera, wobei die Auswertevorrichtung mittels Bildverarbeitung aus den Bilddatensätzen eine Bewegung der Seifenblase ableitet. Durch die Erkennung der Bewegung der Seifenblase wird es möglich, mit der Auswertevorrichtung die Luftströmung zu messen. Besonders vorteilhaft ist hier, dass zur Erzeugung von Seifenblasen überwiegend im Prüfraum ohnehin vorhandenes Wasser und nur sehr geringe Mengen an Seifenmolekülen erforderlich sind. Weiter sind Seifenblasen lange haltbar, sodass die Luftströmung über eine große Strecke erfasst werden kann. Darüber hinaus ist eine sehr geringe Luftströmung durch die Bewegung einer Seifenblase bereits messbar. Ohne eine Verwendung der Kamera ist eine Luftströmung auch für eine Bedienperson der Prüfkammer visuell leicht erkennbar. Darüber hinaus wird die Luftströmung durch die Seifenblasen nicht beeinflusst und ein aufwendiger Aufbau von Sensoren am Prüfling ist nicht erforderlich.

Auch kann die Sensoranordnung zwei Kameras zur Aufnahme von Bilddatensätzen umfassen, wobei die Kameras dann in einem Winkel α relativ zueinander angeordnet sein können, derart, dass die Seifenblase in einem gemeinsamen Objektraum der Kameras in einer Luftströmung von den Kameras aufnehmbar ist. Die beiden Kameras können vorzugsweise identisch ausgebildet sein. Wesentlich ist dann, dass die Kameras in einem Winkel relativ zueinander angeordnet sind, sodass die Seifenblase aus zumindest zwei unterschiedlichen Perspektiven zeitgleich aufgenommen werden kann. So ist es immer möglich festzustellen, ob sich eine Seifenblase bewegt beziehungsweise in welche Richtung sich die Seifenblase bewegt. Eine Bewegung der Seifenblase in Richtung einer optischen Achse einer Kamera bewirkt dann zumindest bei der anderen Kamera eine Aufnahme der Bewegung.

Besonders vorteilhaft ist es, wenn ein gemeinsamer Objektraum aus sich überlagernden Objekträumen der Kameras ausgebildet und von der Luftströmung durchströmbar ist. Bei dem gemeinsamen Objektraum handelt es sich um einen dreidimensionalen Raumabschnitt, der von beiden Kameras gleichzeitig erfasst werden kann. Die Kameras sind so ausgerichtet, dass deren jeweilige Objekträume so überlappen, dass ein gemeinsamer Objektraum der Kameras ausgebildet wird, innerhalb dem die Luftströmung aufgenommen werden kann. Unter dem Objektraum der Kamera wird die Menge aller möglichen Objektpunkte verstanden, die von der Kamera abgebildet werden kann beziehungsweise im Rahmen eines Bilddatensatzes aufgenommen werden kann. Der Objektraum befindet sich folglich vor einem Objektiv der Kamera, wobei eine Schnittmenge der jeweiligen Objekträume den gemeinsamen Objektraum ausbildet.

Die Kameras können jeweils mit ihrer optischen Achse relativ zueinander in einem Winkel von 1° bis 179°, bevorzugt 90° angeordnet sein. Wesentlich ist, dass die optischen Achsen der Kameras nicht miteinander fluchten, sodass stets Aufnahmen einer Seifenblase aus unterschiedlichen Perspektiven gemacht werden können. Mit einer Relativanordnung der optischen Achsen von 90° können alle Bewegungen einer Seifenblase in einem dreidimensionalen Raum einfach erfasst werden. Prinzipiell sind jedoch auch andere Anordnungen der Kameras relativ zueinander denkbar.

Mittels der Kamera können mindestens 100 Bilddatensätze pro Sekunde, bevorzugt mindestens 200 Bilddatensätze pro Sekunde aufgenommen werden. Eine Bildfrequenz von 200 Bilddatensätzen pro Sekunde ist beispielsweise besonders vorteilhaft, wenn sich eine Seifenblase mit 5 m/s bewegt. Aus einem zurückgelegten Weg der Seifenblase zwischen zwei Bilddatensätzen beziehungsweise Bildern kann eine Geschwindigkeit der Seifenblase errechnet werden. Die Bildfrequenz kann auch so ausgewählt werden, dass die Bildfrequenz an eine zu erwartende, maximale Geschwindigkeit der Seifenblase angepasst ist. Eine derartige Kamera kann bereits sehr klein sein und so auch einfach in einem Prüfraum angeordnet werden. Weiter ist es möglich, sogenannte Mobiltelefone oder mobile Endgeräte mit jeweils einer darin verbauten Kamera zu verwenden und entsprechend relativ zueinander zu positionieren.

Die Blasenvorrichtung kann eine Strömungseinrichtung zur Erzeugung einer weiteren Luftströmung umfassen. So ist es möglich, die Blaseneinrichtung so auszubilden, dass ein dünner Wasserfilm mittels der Blaseneinrichtung in einer bereits vorhandenen Luftströmung aufgespannt und von dieser zu der Seifenblase ausgebildet wird. Alternativ besteht die Möglichkeit, die Blaseneinrichtung unabhängig von der vorhandenen Luftströmung mit einer eigens zur Erzeugung von Seifenblasen genutzten Luftströmung auszubilden. Dies ist insbesondere dann sinnvoll, wenn die vorhandene Luftströmung nicht zur Erzeugung von Seifenblasen ausreicht. Die Sensoranordnung kann in dem Objektraum eine Hintergrundebene für zumindest eine Kamera aufweisen, die vorzugsweise relativ zu einer optischen Achse der Kamera orthogonal angeordnet sein kann, wobei die Hintergrundebene eine optische Darstellung eines Rasters aufweisen kann. Die Hintergrundebene kann durch eine Platte oder Leinwand ausgebildet sein, auf der die Darstellung des Rasters mittels Farbe aufgebracht ist. Das Raster kann aus einer Punktdarstellung oder Liniendarstellung gebildet sein, vorzugsweise aus Quadraten mit gleicher Seitenlänge. So wird es möglich das Raster als eine optische Referenzmarke bei einer Auswertung der Bilddaten zu verwenden, da der Abstand des Rasters zu der Kamera und die Seitenlänge bekannt sind. Vorteilhaft kann für beide Kameras eine derartige Hintergrundebene vorhanden sein.

Die optische Darstellung eines Rasters auf einer Projektionsfläche in der Hintergrundebene kann mittels eines Lasers erfolgen, dessen Projektionsachse relativ zu der optischen Achse der Kamera in einem Winkel γ angeordnet sein kann. Die Projektionsfläche kann dann durch eine Platte oder Leinwand ausgebildet sein. Das Raster kann dann ebenfalls aus einer Punktdarstellung oder Liniendarstellung gebildet sein, vorzugsweise aus Quadraten mit gleicher Seitenlänge. Neben der Ausbildung einer optische Referenzmarke mit dem Laser auf der Projektionsfläche, kann von der Seifenblase Laserlicht reflektiert werden, wodurch mit der Kamera Laserlicht des Rasters und der Seifenblase aufnehmbar und mittels der Auswertevorrichtung aus den Bilddaten auswertbar wird. Die relative Lage der Projektionsachse in dem Winkel γ zu der optischen Achse der Kamera bewirkt einen Versatz des reflektierten Laserlichtes des Rasters und der Seifenblase, woraus eine Lage der Seifenblase im Objektraum mittels der Auswertevorrichtung errechnet werden kann. Vorteilhaft kann für beide Kameras eine derartige Projektionsfläche mit insgesamt einem Laser oder zwei Lasern vorhanden sein.

Die erfindungsgemäße Prüfkammer, insbesondere Klimakammer, weist eine erfindungsgemäße Sensoranordnung auf. Zu den mit der erfindungsgemäßen Prüfkammer erzielbaren Vorteilen wird auf die Vorteilsbeschreibung der erfindungsgemäßen Sensoranordnung verwiesen.

Bei der Prüfkammer kann vorgesehen sein, die Kamera innerhalb oder außerhalb eines Prüfraums der Prüfkammer anzuordnen, wobei die Blasenvorrichtung innerhalb des Prüfraums angeordnet sein kann. Wenn eine vergleichsweise kleine Kamera verwendet wird, kann diese innerhalb des Prüfraums bereits leicht angeordnet werden. Wenn die Kamera nicht bestimmten Prüfbedingungen ausgesetzt werden soll, ist es auch möglich, die Kamera außerhalb des Prüfraums an der Prüfkammer anzuordnen. Eine Aufnahme einer Luftströmung beziehungsweise einer Seifenblase kann dann durch Fenster in der Prüfkammer erfolgen. Darüber hinaus können auch mehr als eine, oder mehr als zwei Kameras zur Ausbildung der Sensoranordnung eingesetzt werden, sodass ein Prüfraum nahezu vollständig mit bereits zwei Kameras aufgenommen werden kann. So wird es dann möglich, im gesamten Prüfraum eine Luftströmung zu messen.

Bei dem erfindungsgemäßen Verfahren zur Messung einer Luftströmung in einer Prüfkammer, insbesondere Klimakammer, werden in einer Luftströmung mittels einer Blasenvorrichtung Seifenblasen erzeugt, wobei einer Kamera Bilddatensätze einer Seifenblase in der Luftströmung in einem Objektraum der Kamera aufgenommen werden, wobei die Bilddatensätze der Kamera mittels einer Auswertevorrichtung verarbeitet werden, wobei die Auswertevorrichtung aus einer zeitlichen Abfolge der Bilddatensätze eine Bewegung der Seifenblase ableitet und die Luftströmung misst. Zu den vorteilhaften Wirkungen des erfindungsgemäßen Verfahrens wird auf die Vorteilsbeschreibung der erfindungsgemäßen Sensoranordnung verwiesen.

Die Auswertevorrichtung kann aus der Bewegung der Seifenblase eine Luftgeschwindigkeit und/oder Strömungsrichtung der Luftströmung messen. Die Luftgeschwindigkeit kann bereits einfach dadurch festgestellt werden, dass eine zurückgelegte Strecke einer Seifenblase zwischen der Aufnahme von zwei Bilddatensätzen bestimmt wird. Alternativ kann auch ein Messzeitabschnitt definiert sein, innerhalb dem die zurückgelegte Strecke gemessen wird. Auch kann aus der Richtung, in der sich die Seifenblase bewegt, einfach die Strömungsrichtung der Luftströmung abgeleitet werden.

Die Auswertevorrichtung kann aus Bildkoordinaten der Bilddatensätze räumliche Koordinaten für die Bewegung der Seifenblase berechnen. Die räumlichen Koordinaten können beispielsweise in Abhängigkeit einer Relativlage von optischen Achsen zweier Kameras mittels Triangulation bestimmt werden. Auch kann eine Gestalt der Seifenblase mittels Bildbearbeitung erkannt und in räumliche Koordinaten umgesetzt werden. So ist es dann möglich, eine Bewegungsrichtung und auch Bewegungsgeschwindigkeit der Seifenblase innerhalb eines gemeinsamen Objektraums der Kameras anhand von räumlichen Koordinaten des gemeinsamen Objektraums zu bestimmen.

Mittels der Kamera können aus Pixeln gebildete Aufnahmen der Seifenblase, die durch die Bilddatensätze repräsentiert werden, erfasst werden, wobei den Bilddatensätzen jeweils Zeitwerte innerhalb eines Messzeitabschnitts zugeordnet werden können, wobei die Bilddatensätze in einer Speichereinrichtung der Auswertevorrichtung gespeichert werden können. Als eine Speichereinrichtung können allgemein bekannte Medien eingesetzt werden, die vorzugsweise eine dauerhafte Aufbewahrung der Daten ermöglichen. Demnach kann der gesamte Messzeitabschnitt mit sämtlichen durch die Kamera gewonnenen Bilddatensätzen aufgezeichnet werden. Durch die Korrelation der Bilddatensätze mit Zeitwerten wird es möglich, den Zeitpunkt einer Bewegung der Seifenblase genau nachzuvollziehen. Eine Auswertung kann zeitsynchron zu einem Prüfablauf oder nach einer Durchführung des Prüfablaufs erfolgen, wenn die Bilddatensätze in der Speichereinrichtung zusammen mit den Zeitwerten gespeichert werden. Auch wird es dann möglich, nach der Durchführung eines Prüfablaufs die Bewegung einer Seifenblase zu bestimmen beziehungsweise eine Luftströmung zu messen, um beispielsweise den Prüfablauf zu untersuchen.

Die Auswertevorrichtung kann einen Geschwindigkeitsvektor einer Luftgeschwindigkeit der Luftströmung in dem gemeinsamen Objektraum aus einer Kreuzkorrelationsfunktion zwischen benachbarten Bildbereichen zeitlich aufeinander folgender Bilddatensätze berechnen. Der Geschwindigkeitsvektor kann dann eine Richtung und Geschwindigkeit der Seifenblase für jeden Punkt einer Bewegungsbahn der Seifenblase im gemeinsamen Objektraum beschreiben. Zunächst können dazu die Geschwindigkeitskomponenten des Geschwindigkeitsvektors in der jeweiligen Bildebene einer Kamera mittels der Kreuzkorrelationsfunktion errechnet werden.

Auch kann mit einem Laser eine optische Darstellung eines Rasters auf einer Projektionsfläche in einer Hintergrundebene der Kamera erzeugt werden, wobei die Auswertevorrichtung eine Reflexion des Laserlichtes auf der Projektionsfläche und der Seifenblase verarbeiten kann. Insbesondere kann so einfach eine Lage und Geschwindigkeit der Seifenblase im Objektraum mittels der Auswertevorrichtung errechnet werden.

Vorteilhaft ist es, wenn von der Kamera in dem Objektraum eine Mehrzahl von Seifenblasen gleichzeitig aufgenommen wird. So ist es dann auch möglich festzustellen, ob gegebenenfalls in dem Objektraum zum gleichen Zeitpunkt unterschiedliche Luftströmungen und/oder Luftgeschwindigkeiten vorliegen. Mit einer steigenden Anzahl von Seifenblasen in einer Bildaufnahme beziehungsweise einem Bilddatensatz können Strömungsverhältnisse noch genauer berechnet werden.

So kann dann auch die Auswertevorrichtung für die jeweiligen Seifenblasen eine Luftströmung messen. Beispielsweise können an unterschiedlichen Orten innerhalb des gemeinsamen Objektraums befindliche Seifenblasen jeweils unterschiedliche Geschwindigkeiten und Bewegungsrichtungen aufweisen.

Die Auswertevorrichtung kann für die Luftströmung in dem Objektraum eine grafische Darstellung mit einer Luftgeschwindigkeit und/oder Strömungsrichtung erzeugen. Der Objektraum kann beispielsweise dreidimensional dargestellt werden, wobei dann durch Linien und/oder Farben eine Strömungsrichtung und Luftgeschwindigkeit dargestellt werden kann. So ist dann für eine Bedienperson leicht ersichtlich, wie sich die Luftströmung im Bereich eines Prüflings verhält. Die Bedienperson kann dann auch beurteilen, ob die Luftströmung gegebenenfalls Einfluss auf einen Prüfablauf hat. Umgekehrt kann auch bewusst eine Luftströmung als eine Prüfbedingung erzeugt werden, wobei dann aufgrund der grafischen Darstellung eine Kontrolle dieser Luftströmung erfolgen kann.

Von der Blasenvorrichtung können Seifenblasen mit einem Durchmesser von 10 mm bis 20 mm erzeugt werden. Wie sich herausgestellt hat, sind Seifenblasen dieser Größe besonders einfach zu erzeugen und können leicht von der Auswertevorrichtung in einem Bilddatensatz erkannt werden. Weiter können die Seifenblasen unterschiedlich groß sein, da die Größe der Seifenblasen bei der Messung der Luftströmung kaum von Bedeutung ist. Größere Seifenblasen neigen jedoch zur Verformung und sind in ihrer runden Gestalt weniger stabil, was eine erweiterte Bildverarbeitung zur Bestimmung genauer Messwerte erfordert.

Weitere vorteilhafte Ausführungsformen des Verfahrens ergeben sich aus den auf den Vorrichtungsanspruch 1 rückbezogenen Unteransprüchen.

Nachfolgend wird die Erfindung unter Bezugnahme auf die beigefügten Zeichnungen näher erläutert.

Es zeigen:
- **Fig. 1**: eine schematische Darstellung einer Sensoranordnung in einer Seitenansicht;
- **Fig. 2**: die Darstellung der Sensoranordnung in einer Vorderansicht.

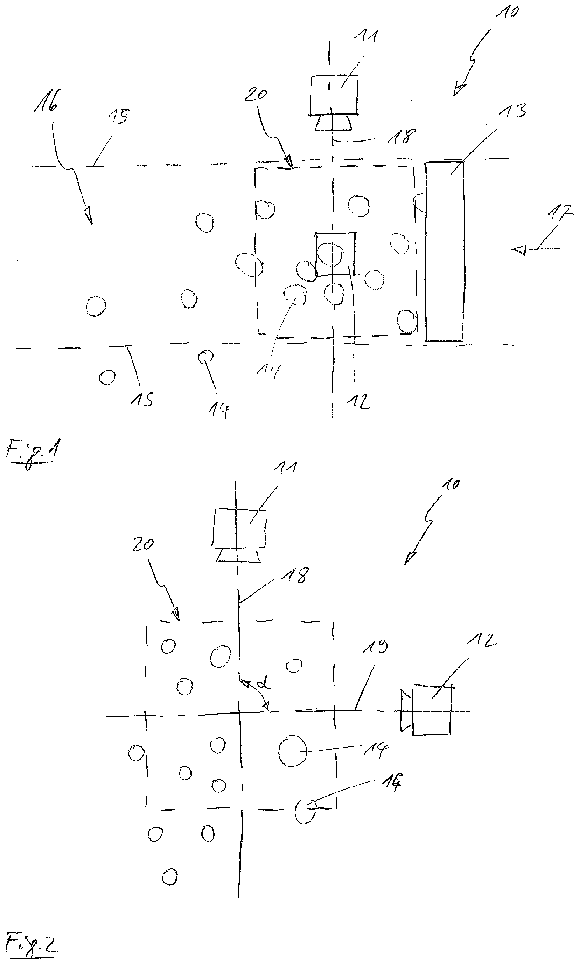

Eine Zusammenschau der **Fig. 1** und **2** zeigt eine Sensoranordnung 10 mit zwei Kameras 11 und 12 zur Aufnahme von Bilddatensätzen und eine hier lediglich schematisch dargestellte Blasenvorrichtung 13 zur Erzeugung von Seifenblasen 14. Eine Auswertevorrichtung zur Verarbeitung der Bilddatensätze der Kameras ist aus einem Computer gebildet und hier nicht dargestellt. Eine Luftströmung verläuft hier im Wesentlichen im Bereich eines, hier mit gestrichelten Linien 15 gekennzeichneten Strömungsabschnitts 16 in Richtung eines Pfeils 17. Demnach wird der Luftströmung mittels der Blasenvorrichtung 15 eine Anzahl Seifenblasen 14 kontinuierlich zugefügt, die von der Luftströmung dann in Richtung der Kameras 11 und 12 transportiert werden. Die Kameras 11 und 12 weisen jeweils eine optische Achse 18 beziehungsweise 19 auf, wobei die optischen Achsen 18 und 19 relativ zueinander in einem Winkel α von 90° angeordnet sind. Weiter sind die optischen Achsen 18 und 19 relativ zu der Luftströmung beziehungsweise der mit dem Pfeil 17 gekennzeichneten Bewegungsrichtung der Luftströmung quer angeordnet. Mittels der Kameras 11 und 12 ist ein hier vereinfacht dargestellter, gemeinsamer Objektraum 20 gleichzeitig erfassbar, sodass von in dem gemeinsamen Objektraum 20 befindlichen Seifenblasen 14 mit beiden Kameras 11 und 12 zeitgleich Aufnahmen gemacht beziehungsweise Bilddatensätze aufgenommen werden können. Aus den Bilddatensätzen kann eine Bewegung der jeweiligen Seifenblasen 14 abgeleitet und damit auch eine Luftgeschwindigkeit und eine Strömungsrichtung der Luftströmung gemessen werden. Die Sensoranordnung 10 ist innerhalb einer hier nicht näher dargestellten Prüfkammer angeordnet.

## Patentansprüche

1. Sensoranordnung (10) zur Messung einer Luftströmung, insbesondere zur Messung innerhalb einer Prüfkammer,
**dadurch gekennzeichnet,**
**dass** die Sensoranordnung eine Kamera (11, 12) zur Aufnahme von Bilddatensätzen, eine in der Luftströmung anordbare Blasenvorrichtung (13) zur Erzeugung von Seifenblasen und eine Auswertevorrichtung zur Verarbeitung der Bilddatensätze der Kamera umfasst, wobei eine Seifenblase (14) in einem Objektraum (20) der Kamera in einer Luftströmung von der Kamera aufnehmbar ist, wobei mittels der Auswertevorrichtung aus einer zeitlichen Abfolge von Bilddatensätzen eine Bewegung der Seifenblase ableitbar und die Luftströmung messbar ist.

2. Sensoranordnung nach Anspruch 1,
**dadurch gekennzeichnet,**
**dass** die Sensoranordnung zwei Kameras (11, 12) zur Aufnahme von Bilddatensätzen umfasst, wobei die Kameras in einem Winkel α relativ zueinander angeordnet sind, derart, dass die Seifenblase (14) in einem gemeinsamen Objektraum (20) der Kameras in einer Luftströmung von den Kameras aufnehmbar ist.

3. Sensoranordnung nach Anspruch 2,
**dadurch gekennzeichnet,**
**dass** ein gemeinsamer Objektraum (20) aus sich überlagernden Objekträumen der Kameras (11, 12) ausgebildet und von der Luftströmung durchströmbar ist.

4. Sensoranordnung nach Anspruch 2 oder 3,
**dadurch gekennzeichnet,**
**dass** die Kameras (11, 12) jeweils mit ihrer optischen Achse (18, 19) relativ zueinander in einem Winkel α von 1° bis 179°, bevorzugt 90° angeordnet sind.

5. Sensoranordnung nach einem der vorangehenden Ansprüche,
**dadurch gekennzeichnet,**
**dass** mittels der Kamera (11, 12) mindestens 100 Bilddatensätze pro Sekunde, bevorzugt mindestens 200 Bilddatensätze pro Sekunde aufnehmbar sind.

6. Sensoranordnung nach einem der vorangehenden Ansprüche,
**dadurch gekennzeichnet,**
**dass** die Blasenvorrichtung (13) eine Strömungseinrichtung zur Erzeugung einer weiteren Luftströmung umfasst.

7. Sensoranordnung nach einem der vorangehenden Ansprüche,
**dadurch gekennzeichnet,**
**dass** die Sensoranordnung in dem Objektraum (20) eine Hintergrundebene für zumindest eine Kamera (11, 12) aufweist, die vorzugsweise relativ zu einer optischen Achse der Kamera orthogonal angeordnet ist, wobei die Hintergrundebene eine optische Darstellung eines Rasters aufweist.

8. Sensoranordnung nach Anspruch 7,
**dadurch gekennzeichnet,**
**dass** die optische Darstellung eines Rasters auf einer Projektionsfläche in der Hintergrundebene mittels eines Lasers erfolgt, dessen Projektionsachse relativ zu der optischen Achse der Kamera (11, 12) in einem Winkel γ angeordnet ist.

9. Prüfkammer, insbesondere Klimakammer, mit einer Sensoranordnung (10) nach einem der vorangehenden Ansprüche.

10. Prüfkammer nach Anspruch 9,
**dadurch gekennzeichnet,**
**dass** die Kamera (11, 12) innerhalb oder außerhalb eines Prüfraums der Prüfkammer angeordnet ist, wobei die Blasenvorrichtung (13) innerhalb des Prüfraums angeordnet ist.

11. Verfahren zur Messung einer Luftströmung in einer Prüfkammer, insbesondere Klimakammer,
**dadurch gekennzeichnet,**
**dass** in einer Luftströmung mittels einer Blasenvorrichtung (13) Seifenblasen (14) erzeugt werden, wobei mit einer Kamera (11, 12) Bilddatensätze einer Seifenblase (14) in der Luftströmung in einem Objektraum (20) der Kamera aufgenommen werden, wobei die Bilddatensätze der Kamera mittels einer Auswertevorrichtung verarbeitet werden, wobei die Auswertevorrichtung aus einer zeitlichen Abfolge der Bilddatensätze eine Bewegung der Seifenblase ableitet und die Luftströmung misst.

12. Verfahren nach Anspruch 11,
**dadurch gekennzeichnet,**
**dass** die Auswertevorrichtung aus der Bewegung der Seifenblase (14) eine Luftgeschwindigkeit und/oder Strömungsrichtung der Luftströmung misst.

13. Verfahren nach einem der Ansprüche 11 oder 12,
**dadurch gekennzeichnet,**
**dass** die Auswertevorrichtung aus Bildkoordinaten der Bilddatensätze räumliche Koordinaten für die Bewegung der Seifenblase (14) berechnet.

14. Verfahren nach Anspruch 11 bis 13,
**dadurch gekennzeichnet,**
**dass** mittels der Kamera (11, 12) aus Pixeln gebildete Aufnahmen der Seifenblase (14), die durch die Bilddatensätze repräsentiert werden, erfasst werden, wobei den Bilddatensätzen jeweils Zeitwerte innerhalb eines Messzeitabschnitts zugeordnet werden, wobei die Bilddatensätze in einer Speichereinrichtung der Auswertevorrichtung gespeichert werden.

15. Verfahren nach einem der Ansprüche 11 bis 14,
**dadurch gekennzeichnet,**
**dass** die Auswertevorrichtung einen Geschwindigkeitsvektor einer Luftgeschwindigkeit der Luftströmung in dem gemeinsamen Objektraum (20) aus einer Kreuzkorrelationsfunktion zwischen benachbarten Bildbereichen zeitlich aufeinanderfolgender Bilddatensätze berechnet.

16. Verfahren nach einem der Ansprüche 11 bis 15,
**dadurch gekennzeichnet,**
**dass** mit einem Laser eine optische Darstellung eines Rasters auf einer Projektionsfläche in einer Hintergrundebene der Kamera (11, 12) erzeugt wird, wobei die Auswertevorrichtung eine Reflexion des Laserlichtes auf der Projektionsfläche und der Seifenblase (14) verarbeitet.

17. Verfahren nach einem der Ansprüche 11 bis 16,
**dadurch gekennzeichnet,**
**dass** von der Kamera (11, 12) in dem Objektraum (20) eine Mehrzahl von Seifenblasen (14) gleichzeitig aufgenommen wird.

18. Verfahren nach Anspruch 17,
**dadurch gekennzeichnet,**
**dass** die Auswertevorrichtung für die jeweiligen Seifenblasen (14) die Luftströmung misst.

19. Verfahren nach einem der Ansprüche 11 bis 18,
**dadurch gekennzeichnet,**
**dass** die Auswertevorrichtung für die Luftströmung in dem Objektraum (20) eine grafische Darstellung mit einer Luftgeschwindigkeit und/oder Strömungsrichtung erzeugt.

20. Verfahren nach einem der Ansprüche 11 bis 19,
**dadurch gekennzeichnet,**
**dass** von der Blasenvorrichtung (13) Seifenblasen (14) mit einem Durchmesser von 10 bis 20 mm erzeugt werden.
